# EUROPEAN PATENT SPECIFICATION

(11) **EP 0 420 643 B1**
(45) Date of publication and mention of the grant of the patent: **02.12.1998**
(21) Application number: 90310596.3
(22) Date of filing: 27.09.1990
(51) Int. Cl.: G06K 7/10, A47F 9/04, G07G 1/00

(54) **Point-of-sale data terminal**
Verkaufsstellendatenterminal
Terminal de donnée d'un point de vente

(30) Priority: 29.09.1989 US 414808
(43) Date of publication of application: 03.04.1991
(73) Proprietor: NCR International, Inc., Dayton, Ohio 45479 (US)
(72) Inventor: Wike, Charles Kenneth, Jr., Ithaca, New York 14850 (US); Anderson, Richard Eugene, Norcross, Georgia 30093 (US); McGaha, Jerry Allen, Gainesville, Georgia 30501 (US)
(74) Representative: Irish, Vivien Elizabeth

(56) References cited:
- EP-A- 0 283 241
- EP-A- 0 360 249
- EP-A- 0 363 035
- EP-A- 0 412 544
- US-A- 4 652 732
- US-A- 4 762 984

## Description

This invention relates to point-of-sale data terminal devices.

A known present-day merchandising checkout system of the kind found in supermarkets and the like employs an optical scanning unit located in the checkout counter and a point-of-sale data terminal device located in the vicinity of the scanning unit. The known system has the disadvantage of occupying a considerable amount of space.

Having regard to Article 54(3) EPC, the document EP-A-0 360 249 discloses commodity data reading apparatus wherein two scanning windows are mounted in a support post which extends upwardly from a checkout counter surface.

Also having regard to Article 54(3) EPC, the document EP-A-0 412 544 discloses, in one embodiment, a point-of-sale system wherein a scanning head containing an optical scanner is mounted at one end of a flexible arm the other end of which is mounted on a side wall of a cash register or POS terminal.

The document US-A-4 762 984 discloses scanning apparatus wherein a scanner having a box-like housing is mounted horizontally below, or vertically on, a checkout counter.

The document EP-A-0 283 241 discloses a checkout system wherein a scanner is located in a support post extending vertically upward from the checkout counter.

It is an object of the present invention to provide a point-of-sale data terminal device which enables the provision of a compact checkout system.

Therefore, according to the present invention, there is provided a point-of-sale data terminal device comprising a wall portion forming part of the housing of said data terminal device, an optical scanning means mounted in said wall portion and adapted to project scanning light beams outwardly from said data terminal device, whereby an object positioned adjacent said optical scanning means may be scanned by said scanning light beams, wherein said optical scanning means includes a housing member which contains an optical scanning device, and wherein said housing member is pivotally mounted in said wall portion, whereby said scanning light beams may be projected outwardly in a selectable scanning direction.

Embodiments of the invention will now be described by way of example, with reference to the accompanying drawings, in which:
Fig. 1 is a perspective view of a data terminal device showing a scanning unit extending outwardly from a side wall of the terminal device;
Fig. 2 which is not an embodiment of the invention, is a perspective view of a data terminal device showing a scanning unit mounted flush with one of the walls of the terminal device;
Fig. 3 is a partial side sectional view of the scanning unit of Fig. 1 showing the socket member mounted to the side wall of the terminal device enabling the scanning unit to be rotated to a plurality of scanning positions;
Fig. 4 is a sectional view taken on line 4-4 of Fig. 3 showing an end view of the socket member and the scanning unit; and
Fig. 5 is a block diagram of the data processing system of the present invention.

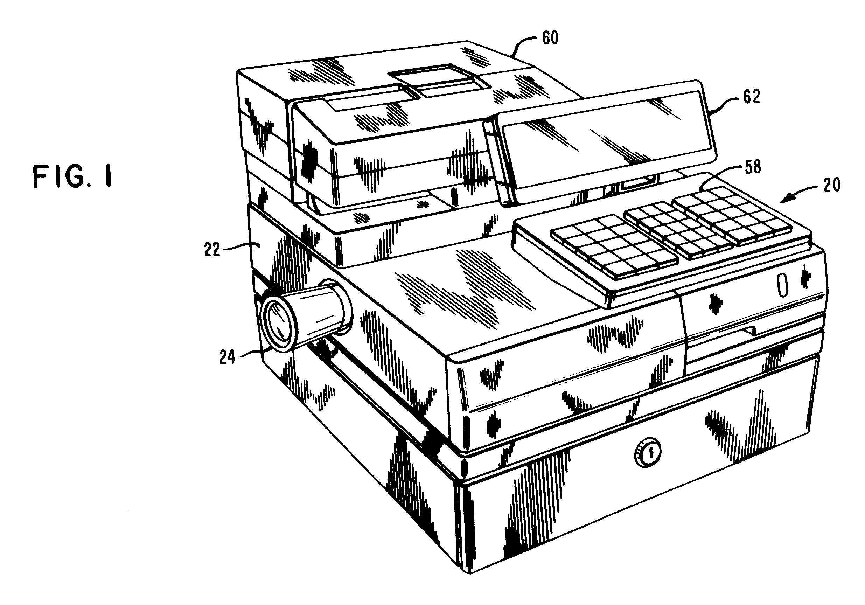

Referring to the drawings, Fig. 1 is a perspective view of a terminal device generally indicated by the numeral 20 and includes a side wall 22 in which is mounted an optical scanning unit 24. The scanning unit 24 projects outwardly from the wall 22. As will be described hereinafter, the scanning unit is mounted for pivotal movement enabling the checkout operator to manually position the scanning unit in a number of scanning positions depending on the needs of the operator.

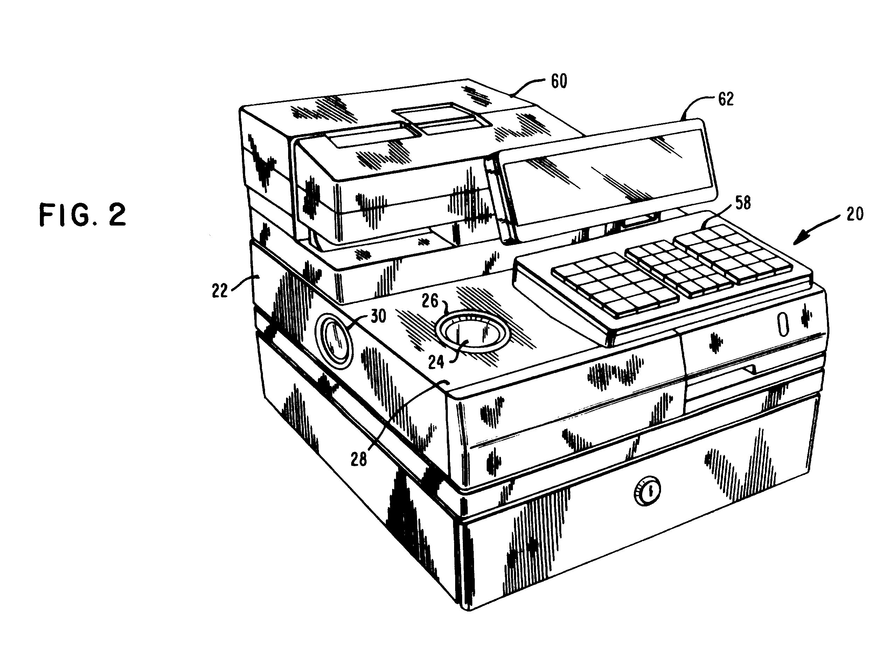

Fig. 2 of the drawings is a similar view of the terminal device 20 shown in Fig. 1 but with the scanning unit 24 mounted within the terminal device with the face 26 of the scanning unit 24 flush with a wall of the terminal device. As shown in Fig. 2, the face 26 of the scanning unit 24 is mounted flush with the surface of a top wall member 28. In this case the scanning unit is not mounted for pivotal movement. The scanning unit 24 may also be located in any of the wall members of the terminal device as is indicated by the scanning unit 30 shown located on the side wall 22. If required, two or more scanning units may be mounted within the terminal device as shown in Fig. 2. Furthermore, the pivotable scanning unit 24 shown in Fig. 1 may be located in any of the wall members of the terminal device as indicated in Fig. 2. Also, two or more of such scanning units may be mounted in the terminal device if desired.

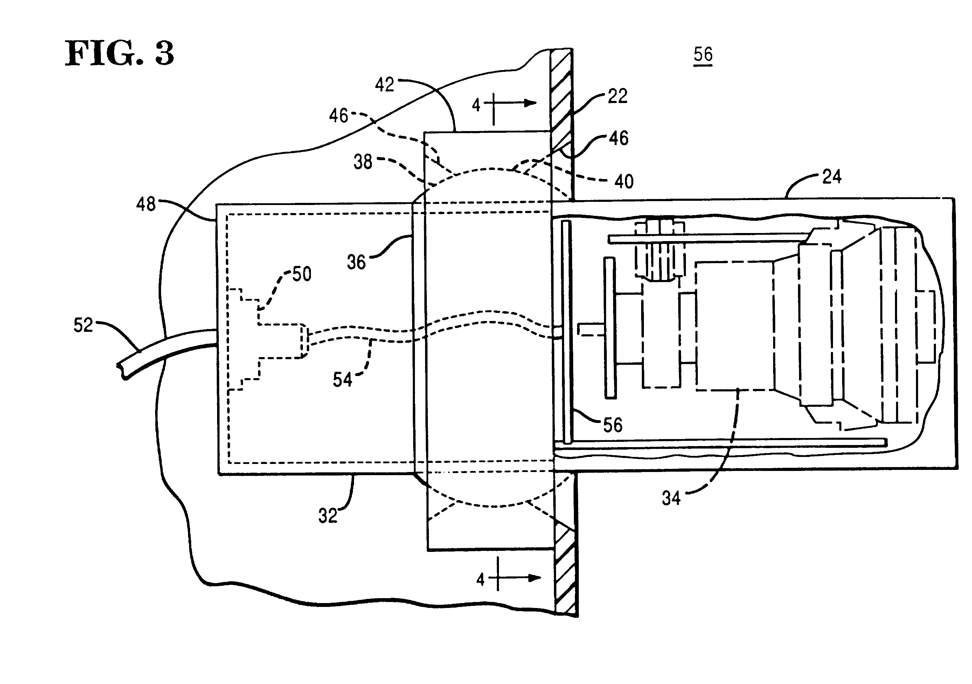

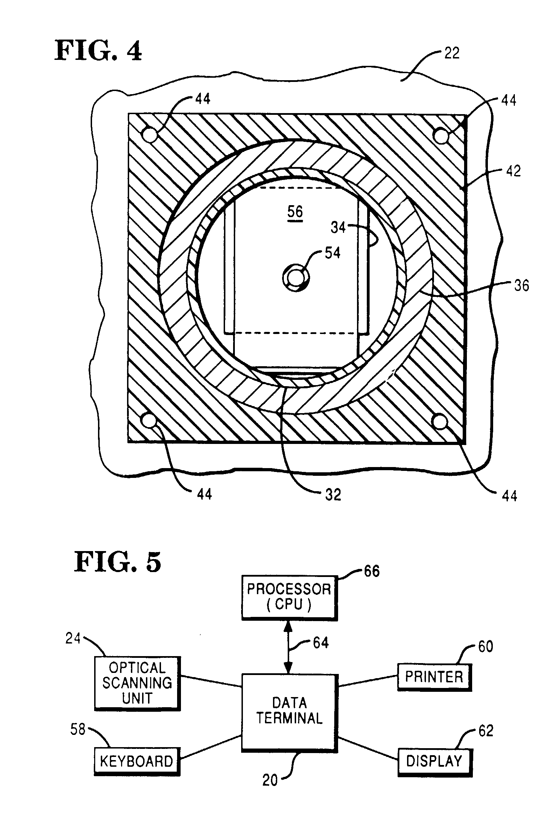

Referring now to Figs. 3 and 4, there are shown views of the scanning unit 24 (Fig. 1) mounted within the terminal device 20. The scanning unit 24 comprises an elongated hollow casing member 32 within which is mounted a compact scanning device 34. Since the precise construction of the compact scanning device is not essential to the present invention, such construction will not be described in detail herein. A suitable scanning device includes a laser beam source, means for directing the laser beam to provide a scanning pattern in the region of an object to be scanned, and a photosensitive device for detecting light reflected from the scanned object. An example of a compact optical scanning device is disclosed in European Patent Application No. 90308129.7 in the name of NCR Corporation and published as EP-A-0 412 680. Secured to the outer surface of the casing member 32 is an annular shaped bearing member 36 having a circular surface 38 which slidably engages the correspondingly configured socket 40 of a support member 42 secured to the side wall member 22 by any conventional means such as screws 44 (Fig. 4). It will be seen that this construction enables the scanning unit 24 to be manually pivoted in any direction within the socket 40.

The support member 42 includes a pair of opposed recessed annular surfaces 46 which are orientated to enable the scanning unit 24 to be pivoted from a horizontal position to an angular position. In the present embodiment, the scanning unit can be pivoted through 60 degrees. Secured to the rear wall member 48 of the scanning unit 24 is a plug member 50 to which is attached a power cable 52. A connecting cable 54 secured to the plug member 50 is connected to a printed circuit board 56 for supplying power to the scanning unit.

Referring to Fig. 5, there is shown a block diagram of the data processing system associated with the present invention. As shown, the data terminal device 20 receives data from the optical scanning unit 24 and the keyboard 58 (Figs. 1 and 2) and controls the operation of the printer 60 and the display 62 (Figs. 1 and 2) associated with the terminal device in a manner that is well known in the art. A remote processor (CPU) 66 is coupled over a cable 64 to the terminal device. During a checkout operation, the scanning unit 24 will scan a coded label (not shown) located on the purchased merchandise item thereby generating data identifying the purchased merchandise item. This data is transmitted to the terminal device 20. If the coded label is unreadable, the checkout operator will enter the same data utilizing the keyboard 58. The generated data is then transmitted from the terminal device 20 to the processor 66 over the cable 64. The processor 66 will look up the price of the purchased merchandise item using the received data. This price information is transmitted to the terminal device 20 which operates the printer 60 to print the price on a receipt record and operates the display 62 to display the price.

It will thus be seen that the data terminal device incorporating the scanning unit can be located anywhere in the supermarket to provide a checkout operation with the scanning unit being adjusted to provide the most convenient scanning position for the operator enabling the operator to checkout the purchased merchandise items in the minimum amount of time. While the terminal device has been described with respect to a supermarket environment, it is obvious that the the present embodiment of the terminal device may be used in other checkout environments such as fast food restaurants or in self-service environments in which the customer utilizes the scanning unit to read bar coded labels on purchased merchandise items or coded merchandising coupons.

## Claims

1. A point-of-sale data terminal device (20) comprising : a wall portion (22,28) forming part of the housing of said data terminal device (20), an optical scanning means (24) mounted in said wall portion (22) and adapted to project scanning light beams outwardly from said data terminal device (20), whereby an object positioned adjacent said optical scanning means (24) may be scanned by said scanning light beams, wherein said optical scanning means (24) includes a housing member (32) which contains an optical scanning device (34), and wherein said housing member (32) is pivotally mounted in said wall portion (22), whereby said scanning light beams may be projected outwardly in a selectable scanning direction.

2. A point-of-sale data terminal device (20) according to claim 1, wherein said housing member (32) is provided with an annular bearing member (36) which cooperates with a socket member (40) disposed in said wall portion (22).

3. A point-of-sale data terminal device (20) according to any one of the preceding claims, wherein a further optical scanning means (24,30) is mounted in a further wall portion (22,28) of said data terminal device (20).

4. A point-of-sale data terminal device (20) according to claim 3, wherein said wall portion is a side wall portion (22) and said further wall portion is an upper wall portion (28), whereby scanning light beams may be projected generally horizontally and generally upwardly, respectively.

## Patentansprüche

1. Verkaufsstellendatenterminalgerät (20) aufweisend: einen Wandabschnitt (22, 28), der einen Teil des Gehäuses des Datenterminalgeräts (20) bildet, eine optische Abtasteinrichtung (24), die in dem Wandabschnitt (22) befestigt und geeignet ist, Abtastlichtstrahlen aus dem Datenterminalgerät (20) herauszuprojizieren, wodurch ein angrenzend an die optische Abtasteinrichtung (24) positionierter Gegenstand durch die Abtastlichtstrahlen abgetastet werden kann, wobei die optische Abtasteinrichtung (24) ein Gehäuseelement (32) aufweist, das eine optische Abtastvorrichtung (34) enthält, und wobei das Gehäuseelement (32) schwenkbar in dem Wandabschnitt (22) gelagert ist, wodurch die Abtastlichtstrahlen in einer wählbaren Abtastrichtung nach außen projiziert werden können.

2. Verkaufsstellendatenterminalgerät (20) nach Anspruch 1, wobei das Gehäuseelement (32) mit einem ringförmigen Lagerelement (36) versehen ist, das mit einem in dem Wandabschnitt (22) angeordneten Sockelelement (40) zusammenwirkt.

3. Verkaufsstellendatenterminalgerät (20) gemäß einem der vorhergehenden Ansprüche, wobei eine weitere optische Abtasteinrichtung (24, 30) in einem weiteren Wandabschnitt (22, 28) des Datenterminalgeräts (20) befestigt ist.

4. Verkaufsstellendatenterminalgerät (20) nach Anspruch 3, wobei der Wandabschnitt ein Seitenwandabschnitt (22) und der weitere Wandabschnitt ein oberer Wandabschnitt (28) ist, wodurch Abtastlichtstrahlen allgemein horizontal bzw. allgemein nach oben projiziert werden können.

## Revendications

1. Un dispositif terminal de traitement de données de point de vente (20) comportant une paroi (22,28) faisant partie du boîtier dudit dispositif terminal de traitement de données (20), un dispositif de lecture optique (24) monté sur ladite paroi (22) et adapté de façon à projeter un faisceau lumineux de lecture vers l'extérieur dudit dispositif terminal de traitement de données (20), pour qu'un objet adjacent audit dispositif de lecture optique (24) puisse être scanné par ledit faisceau lumineux de lecture, où ledit dispositif de lecture optique (24) comporte une partie boîtier (32) qui contient un instrument de lecture optique (34), et où ledit boîtier (32) est monté dans ladite paroi (22) de façon à pivoter, et par lequel ledit faisceau lumineux de lecture puisse être projeté vers l'extérieur dans une direction choisie.

2. Un dispositif terminal de traitement de données de point de vente (20) selon la revendication 1, dans lequel ledit boîtier (32) est équipé d'un roulement annulaire (36) qui coopère avec un emboîtement (40) situé dans ladite paroi (22).

3. Un dispositif terminal de traitement de données de point de vente (20) selon l'une ou l'autre des revendications précédentes, dans lequel un dispositif de lecture optique supplémentaire (24, 30) est monté dans une paroi distincte (22, 28) dudit dispositif terminal de traitement de données (20).

4. Un dispositif terminal de traitement de données de point de vente (20) selon la revendication 3, dans lequel ladite paroi est une paroi latérale (22) et ladite paroi distincte est une paroi supérieure (28), et dans lequel les faisceaux lumineux de lecture peuvent être projetés généralement horizontalement et généralement vers le haut, respectivement.
